Europäisches Patentamt

European Patent Office

Office européen des brevets

(19)

(11) Publication number: **0 041 321**
**B1**

(12) **EUROPEAN PATENT SPECIFICATION**

(45) Date of publication of patent specification: **18.09.85**

(51) Int. Cl.⁴: **G 11 B 5/012, G 11 B 5/147**

(21) Application number: **81301990.8**

(22) Date of filing: **06.05.81**

(54) Recording media.

(30) Priority: **08.05.80 JP 59984/80**

(43) Date of publication of application:
**09.12.81 Bulletin 81/49**

(45) Publication of the grant of the patent:
**18.09.85 Bulletin 85/38**

(84) Designated Contracting States:
**DE FR GB IT NL**

(56) References cited:
**GB-A- 902 838**

**PATENTS ABSTRACTS OF JAPAN, vol. 1, no.
35, 15 April 1977, Section E, page 1984 E 76
PATENTS ABSTRACTS OF JAPAN, vol. 1, no.
132, 31 October 1977, Section E, page 5927 E 77
PATENTS ABSTRACTS OF JAPAN, vol. 2, no.
149, 13 December 1978, Section E, page 9555 E
78
PATENTS ABSTRACTS OF JAPAN, vol. 2, no.
97, 15 August 1978, Section E, page 4766 E 78**

(73) Proprietor: **Nakamatsu, Yoshiro
1-10-309, 5-chome, Minami Aoyama Minato-ku
Tokyo (JP)**

(72) Inventor: **Nakamatsu, Yoshiro
1-10-309, 5-chome, Minami Aoyama Minato-ku
Tokyo (JP)**

(74) Representative: **Shaw, Laurence
George House George Road
Edgbaston Birmingham B15 1PG (GB)**

Courier Press, Leamington Spa, England.

# 0 041 321

**Description**

The invention relates to magnetic discs having tracks for recorded matter. The discs may be rigid or flexible and the means for making the record is magnetic material. A known rigid disc is formed of aluminium or the like having a coating of magnetic material, e.g. *gamma* $Fe_2O_3$, applied by sputtering or like coating method and which is orientated regularly. A further known flexible or floppy disc or diskette is formed of a polyester film to which a coating of magnetic material has been applied; the flexible disc is usually housed in a jacket formed of a soft plastics such as polyvinyl chloride. The magnetic material of the flexible disc is irregular or random.

Known record media suffer from the disadvantage that the output from the individual tracks differs according to the location of the track on the record medium. It is an object of the invention to provide a record medium in which the strength of the magnetic recording material to hold recorded matter is varied so that this disadvantage is overcome.

According to one aspect the invention provides a magnetic disc having a plurality of record tracks characterised in that the magnetic orientation decreases in strength from the inner margin (31) of the disc to the outer margin (29).

In one embodiment the magnetic orientation of the material differs in different regions of the record medium; thus in different regions of the medium the material is regularly oriented, relatively weakly oriented or randomly oriented.

The invention further includes apparatus for making a record disc of the invention characterised in that the apparatus comprises a rotary support (6) for a disc, means for supplying magnetic material from a reservoir (10) to the surface of the disc and means (8, 19, 20, 21) for decreasing the magnetic orientation of the material supplied to the surface of the disc in strength from the inner margin of the disc to the outer margin.

In order that the invention may be well understood it will now be described with reference to the accompanying diagrammatic drawings, in which:—

Figure 1 is a plan view of a known disc being played;

Figure 2 shows the output of some known discs; and

Figure 3 shows graphically the resolution of a known disc;

Figure 4 shows the principle of the invention;

Figure 5 is a graph showing the output of different tracks on a disc of the invention;

Figure 6 is a graph of the resolution of a 75 track of a disc of the invention and of the prior art;

Figure 7 is a plan view of apparatus for making a disc of the invention and Figure 8 is a side elevation of the apparatus of Figure 7.

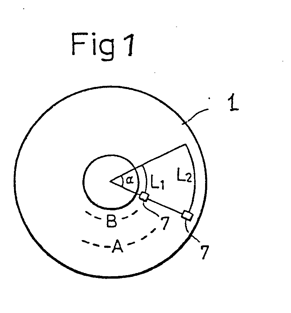

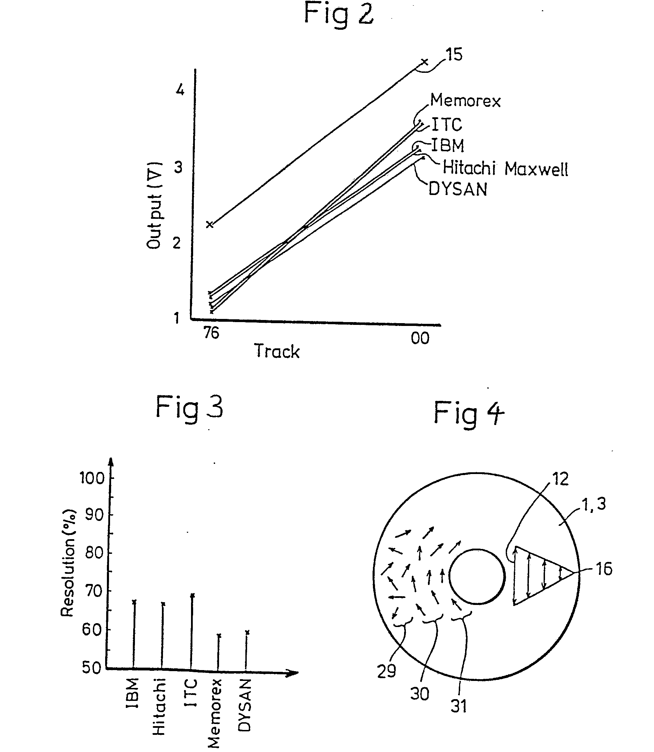

The number of tracks on a recording disc 1 may vary. For example, the number may be 76 with the innermost track being numbered 75 or 76 and the outermost track being 00. When such a disc is played, the head of the playing apparatus scans the disc at an angular velocity α (Figure 1). The distance L1 scanned by the head 7 at a relatively inner track will be smaller than the distance L2 of an outer track and accordingly the relative velocity of the head 7 and disc 1 will vary across the radius of the disc; the output of an inner track will be less than that of an outer track and the recording density (BPI) of an inner track should be greater than that of an outer; for example for an 20 cm (8 inch) diameter disc the recording density at a middle radius should be 7000 BPI and 13000 at an inner track. This means that the resolution must be increased towards the inner periphery of the disc. To achieve this the thickness of the layer of magnetic material may be less at the tracks at the inner side of the disc. This will however also reduce the output of the corresponding track. Tests were performed on five commercially available discs to measure the output and resolution at extreme positions on the discs. The results are shown in the Table below and are summarised in the graphs of Figures 2 and 3 where M=Memorex; ITC=ITC; IBM=BM 3749/12; H M=Hitachi Maxwell; and D=Dysan.

TABLE

| Disc type | Track 00 (1F) | Track 76 (2F/1F) | Resolution % | Ratio of output of inner and outer tracks |
|---|---|---|---|---|
| Memorex | 3.56 | 1.12/1.95 | 58 | 0.31(3.18) |
| ITC | 3.27 | 1.29/1.87 | 69 | 0.39(2.53) |
| IBM 3740/2 | 3.25V | 1.30/1.87 | 67 | 0.40(2.50) |
| Hitachi Maxwell | 3.10 | 1.17/1.78 | 66 | 0.38(2.65) |
| Dysan | 3.53 | 1.09/1.85 | 59 | 0.31(3.24) |

It will be noted that the output and resolution of a track depends on the position of the track on the disc, and that the resolution of the innermost track is as low as 58% to 69%.

2

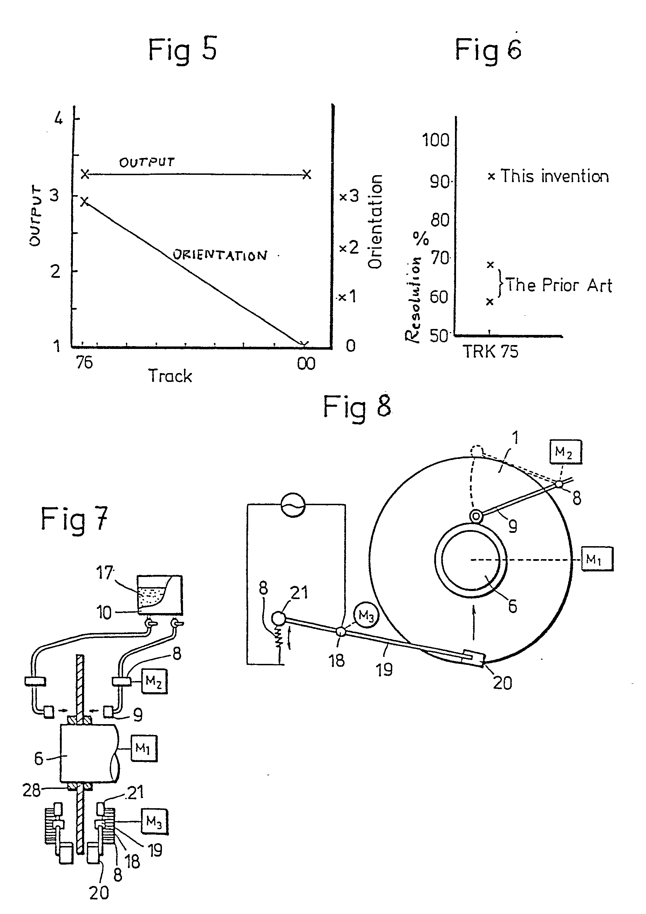

A disc of the invention is shown in Figure 4 and the magnetic material at the inner area of region 31 of the disc has a high degree of regular orientation, that in the middle region 30 has a relatively weak orientation and that in the outer area 29 is most randomly orientated. In this way the differences in relative linear velocity and thickness of coating of magnetic material are compensated for. Thus the output from each track across the radius of the disc is substantially uniform and as shown in Figure 5 and in the graph of Figure 6, the output of the inner track is much greater in a disc of the invention compared with one in the prior art.

A method of making a disc of the invention is illustrated by the apparatus of Figures 7 and 8. A disc (which may be rigid and of aluminium or flexible and of polyester film), is clamped to a rotary shaft 6 by a clamp 28. A magnetic dispersion 17 in a tank 10 is fed to the disc uppermost surface via nozzles 9 rotatable about pivots 8. As the disc rotates the dispersion is fed on to the disc from the nozzles and the coating is thinner at the inner periphery of the disc because of centrifugal forces. A magnetizing device 20 such as a coil magnet is mounted on the tip of an arm 19 pivotal about a shaft 18 and is arranged to move across the disc. A contact shoe 21 is mounted on the opposite end of the arm 19 and is arranged to slide on a resistor 8 so that the resistance value will vary as the arm 19 is swung. In use, when the magnetizing device 20 is at the outer-most edge of the disc the resistance for the coil 20 from the resistor is increased to exert a reduced magnetic field to orient the magnetic particles on the coating applied to the disc. As the arm 19 is swung to the innerside of the disc the resistance is reduced and a greater magnetic field is applied to the magnetic particles there. In this way a disc having tracks with a magnetic orientation which increases from the inside to the outside is produced. The apparatus is powered by motors M1, M2 and M3 which are of known type and are suitably programmed.

### Claims

1. A magnetic disc having a plurality of record tracks charactersed in that the magnetic orientation decreases in strength from the inner margin (31) of the disc (1) to the outer margin (29).

2. Apparatus for making a record disc according to Claim 1, characterised in that the apparatus comprises a rotary support (6) for a disc, means for supplying magnetic material from a reservoir (10) to the surface of the disc and means (8, 19, 20, 21) for decreasing the magnetic orientation of the material supplied to the surface of the disc (1) in strength from the inner margin of the disc to the outer margin.

### Patentansprüche

1. Magnetplatte mit einer Mehrzahl von Aufzeichnungsspuren, dadurch gekennzeichnet, dass die magnetische Orientierung in ihrer Stärke vom Innenrand (31) der Platte (1) zum Aussenrand (29) hin abnimmt.

2. Einrichtung zum Herstellen einer Aufzeichnungsplatte nach Anspruch 1, dadurch gekennzeichnet, dass die Einrichtung eine drehbare Auflage (6) für eine Platte, Mittel zum Zuführen von Magnetstoff aus einem Vorratsbehälter (10) zur Plattenoberfläche und Mittel (8, 19, 20, 21) zum Verringern der Stärke der magnetischen Orientierung des der Oberfläche der Platte (1) zugeführten Werkstoffs vom Platteninnenrand zum Aussenrand hin umfasst.

### Revendications

1. Disque magnétique comportant plusieurs pistes d'enregistrement, caractérisé en ce que l'orientation magnétique diminue d'intensité à partir du bord intérieur (31) du disque (1) vers son bord extérieur (29).

2. Appareil pour fabriquer un disque d'enregistrement suivant la revendication 1, caractérisé en ce qu'il comprend un support tournant (6) pour un disque, un dispositif pour débiter de la matière magnétique à partir d'un réservoir (10) sur la surface du disque et un dispositif (8, 19, 20, 21) pour diminuer l'orientation magnétique de la matière débitée sur la surface du disque (1) à partir du bord intérieur du disque vers son bord extérieur.

# Fig 1

# Fig 2

# Fig 3

# Fig 4

# Fig 5

# Fig 6

# Fig 8

# Fig 7